# DEMANDE DE BREVET EUROPEEN

(11) **EP 1 248 450 A1**
(43) Date de publication de la demande: **09.10.2002**
(21) Numéro de dépôt: 02290857.8
(22) Date de dépôt: 05.04.2002
(51) Int. Cl.: H04M 3/527

(54) **Système de mise en relation directe d'un client et d'un fournisseur mobile de proximité**

(30) Priorité: 06.04.2001 FR 0104732
(71) Demandeur: Rught & Deisen, 75019 Paris (FR)
(72) Inventeur: Alborghetti, Jean, 95270 Luzarches (FR)
(74) Mandataire: Nicolle, Olivier

(57) **Abrégé**

Système destiné à mettre en relation directe par voie électronique une personne client (1) potentiel et une personne fournisseur (3) potentiel comprenant :
- des moyens aptes à déterminer d'une part le service recherché et d'autre part le lieu de fourniture de ce service ;
- des moyens aptes à établir une base de données (7) mettant en correspondance chaque personne fournisseur avec sa localisation géographique et les services qu'il peut fournir, cette base de données (7) étant actualisée périodiquement ;
- des moyens aptes à sélectionner dans ladite base de données (7) la ou les personne(s) fournisseur(s) apte(s) à fournir le service recherché et se trouvant dans la zone de proximité (4) ;
- des moyens aptes à établir une liaison téléphonique directe entre la personne client (1) et la personne fournisseur (3) sélectionnée ou l'une ou chacune des personnes fournisseurs sélectionnées, la personne client (1) et la personne fournisseur étant considérées appelantes lors de ladite liaison téléphonique directe.

## Description

L'invention concerne un système de mise en relation directe d'un client et d'un fournisseur mobile de proximité ainsi qu'un procédé de mise en relation mettant en oeuvre un tel système.

Les fournisseurs mobiles de proximité proposent des services à domicile, ou en un autre lieu défini par le client, et sont par exemple des chauffeurs de taxis, des plombiers, des chauffagistes, des électriciens, des dépanneurs électroménager.

Leur mobilité est nécessaire pour assurer la fourniture du service d'un client à l'autre mais pose un problème quant à la gestion des appels des clients, notamment quant à l'affectation à un client d'un fournisseur proche du lieu de fourniture du service désiré.

On connait déjà des systèmes de mise en relation, par exemple, pour les services taxis.

Dans un tel cas, le client qui souhaite obtenir un taxi téléphone à un standard téléphonique, un opérateur note les renseignements fournis par le client et recherche un taxi proche du lieu indiqué, au besoin en communiquant avec les chauffeurs de taxis pour leur demander leur position et leurs disponibilités.

Un tel système présente plusieurs inconvénients ou limites.

Tout d'abord, de ne pas assurer une recherche automatique et rapide du fournisseur le plus proche du lieu de fourniture du service.

En second lieu, de ne pas permettre de relation téléphonique directe entre le client et le fournisseur.

Enfin, de n'être dédié qu'a un seul service.

Le but de l'invention est de pallier les inconvénients de l'art antérieur.

A cet effet, l'invention a tout d'abord pour objet un système de mise en relation directe d'un client et d'un fournisseur mobile de proximité.

Suivant l'invention, le système est destiné à mettre en relation directe par voie électronique une personne client potentiel susceptible d'exprimer un besoin ( service, lieu de fourniture, délai, quantité, prix) par un terminal de communication et une personne fournisseur potentiel apte à répondre à ce besoin et se trouvant dans une zone géographique au voisinage du lieu où le service doit être fourni (dénommée zone de proximité).

La personne fournisseur fait partie d'un ensemble pré-constitué de fournisseurs pour le service considéré, un ou plusieurs services pouvant être fournis, la personne fournisseur étant essentiellement mobile et équipée d'un terminal de communication.

Pour le fournisseur, le fait d'être essentiellement mobile signifie qu'il dispose d'un moyen de se déplacer, que se soit au moyen d'un véhicule professionnel, à pied, ou de tout autre moyen, de manière à pouvoir assurer sa prestation en des lieux différents d'une prestation à l'autre.

Ce système comprend :
- des premiers moyens aptes à déterminer en fonction de l'appel téléphonique de la personne client à un centre d'appels, d'une part le service recherché et d'autre part le lieu de fourniture de ce service ;
- des deuxièmes moyens aptes, à partir de l'ensemble des fournisseurs, à établir une base de données mettant en correspondance chaque personne fournisseur avec sa localisation géographique et les services qu'il peut fournir, cette base de données étant actualisée périodiquement ;
- des troisièmes moyens aptes à sélectionner dans ladite base de données la ou les personne(s) fournisseur(s) apte(s) à fournir le service recherché et se trouvant dans la zone de proximité ;
- et enfin des quatrièmes moyens aptes à établir une liaison téléphonique directe entre la personne client et la personne fournisseur sélectionnée ou l'une ou chacune des personnes fournisseurs sélectionnées, la personne client et la personne fournisseur étant considérées appelantes lors de ladite liaison téléphonique directe ;

Le système permettant ainsi à la personne client d'obtenir la perspective de la satisfaction du besoin déterminé, à la localisation déterminée et ce par un fournisseur apte à satisfaire ce besoin tant en ce qui concerne sa nature que sa localisation, la personne client et la personne fournisseur étant de surcroît en communication téléphonique directe dont la tarification est affectée symétriquement à la personne client et à la personne fournisseur.

Il en résulte en premier lieu la possibilité pour le client d'être en communication avec la personne fournisseur qui, dans le cas où le client est d'accord, va assurer le service.

Ceci permet au client d'obtenir, au-delà des informations générales sur le service proposé, des informations extrêmement précises sur les conditions d'intervention de la personne fournisseur la plus apte à répondre au besoin.

Le système selon l'invention donne, en outre, la possibilité de proposer tous types de services de proximité en centralisant la gestion des appels des clients au niveau du système de mise en relation.

Le système de mise en relation peut ainsi constituer le noyau d'une plate forme de services de proximité par l'intermédiaire de laquelle un client peut formuler des demandes complexes de plusieurs corps de métiers, ou de fournisseur rendant plusieurs services.

Par ailleurs, le fonctionnement du système est totalement transparent pour le client, celui-ci est juste amené à déterminer les variables d'entrée telles que le service recherché et est immédiatement mis en relation téléphonique directe avec le fournisseur.

Enfin, le système selon l'invention permet de mettre en rapport une personne client (généralement fixe, mais dont le statut mobile/fixe n'est pas essentiel ici) qui paie son appel (via la surtaxation du numéro d'appel par exemple) avec un offreur de service mobile référencé (fournisseur nomade) qui paie également au moins partiellement la communication téléphonique établie directement entre la personne client et la personne fournisseur. Il en résulte une simplicité de tarification, non basée sur un abonnement payé par l'offreur référencé, mais sur une répartition tarifaire sensiblement symétrique de la part du client et du fournisseur, c'est à dire avec des coûts supportés par les deux entités selon une clé de répartition choisie.

Selon un mode de réalisation, lesdits premiers moyens comprennent :
- le terminal de communication dudit centre d'appels apte à répondre à l'appel de la personne client ;
- un dispositif de choix du service désiré relié audit terminal de communication ;
- un dispositif de localisation du lieu de fourniture du service ou de localisation de la personne client relié audit terminal de communication.

Ledit dispositif de choix du service désiré peut être basé sur le principe d'un numéro d'appel par service, le client ayant à sa disposition une liste de métiers et les numéros d'appels s'y rapportant.

Tous ces numéros aboutissent au centre d'appel du système de mise en relation mais le dispositif de choix du service désiré permet alors d'identifier le numéro d'appel composé par la personne client, celle-ci composant un numéro d'appel différent en fonction du service désiré.

Dans une variante, ce dispositif de choix du service désiré peut aussi être un serveur vocal de sélection permettant à la personne client de sélectionner le service désiré avec les touches de son téléphone.

De même, le dispositif de localisation du lieu de fourniture du service peut être un moyen de sélection quelconque comme le serveur vocal.

Le cas le plus fréquent sera néanmoins celui où le lieu de fourniture du service est le lieu d'où appelle la personne client, le dispositif de localisation du lieu de fourniture du service étant alors un dispositif de localisation de la personne client relié au terminal de communication du centre d'appels.

Selon une réalisation, ledit dispositif de localisation de la personne client est, en cas d'appel depuis un téléphone fixe, composé d'un dispositif de lecture du numéro d'appel de cette personne client et d'une base de données fournissant son adresse à partir de son numéro d'appel.

Dans une variante, en cas d'appel depuis un téléphone mobile, ledit dispositif de localisation de la personne client est apte à déterminer la position géographique de celle-ci.

Cette position géographique peut être déterminée directement par le dispositif de localisation ou bien fourni par l'opérateur de téléphonie mobile au terminal de communication du centre d'appel.

Selon un mode de réalisation, lesdits deuxièmes moyens comprennent :
- un dispositif embarqué par chaque personne fournisseur déterminant, pour chacun d'eux, sa position géographique ;
- un dispositif émetteur embarqué par chaque personne fournisseur transmettant ladite position géographique par ondes électromagnétiques ;
- un dispositif fixe récepteur des positions géographiques des personnes fournisseurs émises par ledit dispositif émetteur ;
- une base de données électronique codant, sous forme numérique, la liste des personnes fournisseurs et associant à chacune d'elles un code précisant ses caractéristiques personnalisées, sa position géographique ainsi que les services qu'elle peut fournir ;
- un système de gestion de base de donnée apte à recueillir les informations reçues par le dispositif fixe récepteur des positions géographiques des personnes fournisseurs et à actualiser ladite base de données en conséquence.

Dans une réalisation, ledit dispositif embarqué déterminant la position géographique de chaque personne fournisseur est un dispositif de positionnement GPS.

Dans une réalisation, lesdits dispositifs émetteur embarqué et récepteur fixe sont respectivement un émetteur GSM et un récepteur GSM.

Enfin, on peut réaliser lesdits deuxièmes moyens pour que ladite base de données des personnes fournisseurs ainsi que ledit système de gestion de base de données comprennent un système informatique formant support physique, sur lequel sont installés des logiciels de base de données et de gestion de base de données.

Selon un autre mode de réalisation, lesdits troisièmes moyens comprennent un dispositif de sélection apte à recueillir les informations fournies par le dispositif de choix de service et par le dispositif de localisation de la personne client et apte à obtenir de la base de données des personnes fournisseurs le numéro d'appel du terminal de communication de la personne fournisseur se trouvant dans la zone de proximité.

Dans une variante, ledit dispositif de sélection comprend un système informatique intégré au centre d'appel et muni d'un logiciel de gestion de base de données apte à envoyer des requêtes à la base de données des personnes fournisseurs.

Selon un autre mode de réalisation, lesdits quatrièmes moyens comprennent un dispositif de mise en relation directe apte à composer le numéro d'appel du terminal de communication de la personne fournisseur obtenu par le dispositif de sélection et apte à transférer l'appel de la personne client à ladite personne fournisseur.

Ce rôle de mise en relation peut être attribué à la centrale téléphonique multilignes du centre d'appel.

L'invention a également pour objet un procédé de mise en relation directe d'un client et d'un fournisseur mobile de proximité mettant en oeuvre un système tel que décrit précédemment.

Selon ce procédé :
- les deuxièmes moyens établissent puis actualisent périodiquement une base de données mettant en correspondance chaque personne fournisseur avec sa localisation géographique et les services qu'il peut fournir ;
- à partir d'un appel téléphonique d'une personne client, les premiers moyens déterminent le service désiré par la personne client ainsi que la localisation de fourniture du service désiré ;
- les troisièmes moyens déterminent le numéro d'appel du fournisseur du service désiré se trouvant le plus proche de la localisation de fourniture de ce service ;
- les quatrièmes moyens établissent une liaison téléphonique directe entre la personne client et la personne fournisseur dont le numéro d'appel a été déterminé par les troisièmes moyens.

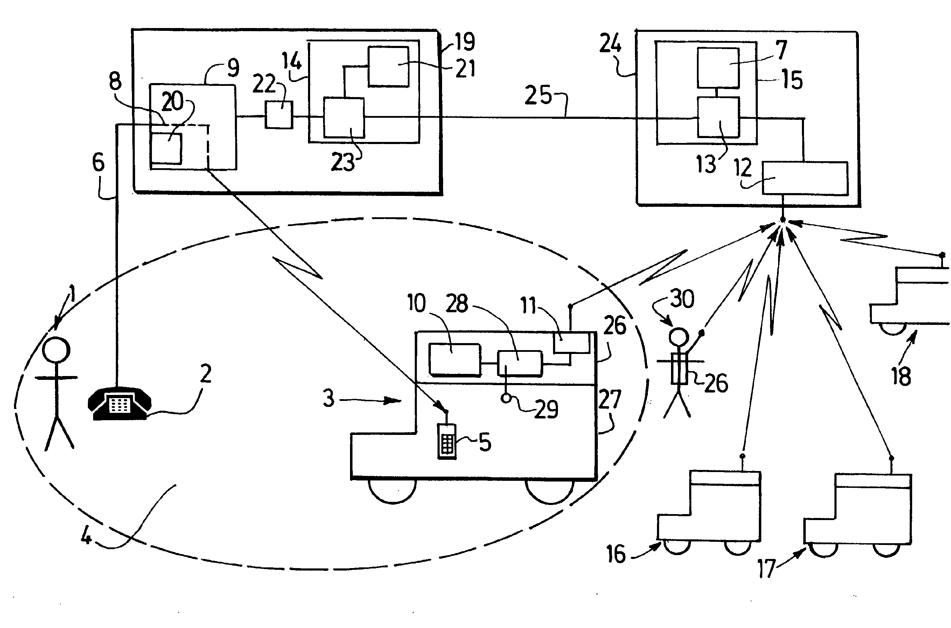

D'autres particularités et avantages de l'invention apparaîtront encore dans la description ci-après relative au dessin annexé, donné à titre d'exemple non limitatif.
la figure unique représente schématiquement les différentes composantes d'un mode de réalisation d'un système de mise en relation selon l'invention.

Le système selon l'invention, schématisé sur la figure, est destiné à gérer les interventions d'un prestataire fournissant divers services à domicile.

Le prestataire dispose d'une flotte de personnes fournisseurs 3, 16, 17, 18 munis chacun d'un téléphone mobile 5 et d'un véhicule 27 afin de se déplacer pour assurer une prestation chez un client qui a préalablement fait appel au prestataire par le biais 6 du téléphone.

Le système de mise en relation se compose tout d'abord d'un centre d'appels 19 hébergé chez le prestataire de services.

Ce centre d'appels comprend :
- une centrale téléphonique multilignes 9 d'entreprise disposant d'un répondeur téléphonique intégré 20 prenant automatiquement en charge les appels entrants 6 en diffusant un message de bienvenue ;
- un système informatique 14 disposant d'une base de données 21 mettant en correspondance chaque numéro de téléphone fixe avec la position géographique (latitude, longitude) du lieu correspondant ;
ces deux entités 9, 14 étant capable de communiquer l'une avec l'autre.

En pratique, la personne client 1 paie son appel au centre d'appels via un mécanisme de tarification approprié, par exemple selon une surtaxation de numéro d'appel.

La centrale téléphonique 9 est capable de lire le numéro de téléphone d'un client téléphonant 6 au standard 9 et de le transmettre au système informatique 14 du centre d'appels 19.

Elle est aussi capable de recevoir et de composer un numéro de téléphone transmis par ledit système informatique 14.

Le système informatique 14 du centre d'appel 19, quant à lui, est un système informatique classique comprenant une interface de communication 22 avec la centrale téléphonique 9 ainsi qu'un logiciel 23 de gestion de bases de données capable de faire des requêtes à une base de données informatique.

Le système de mise en relation se compose en second lieu d'un ensemble, ci-après dénommé « serveur d'informations fournisseurs » 24, comprenant :
- un serveur informatique 15 équipé de logiciels de bases de données 7 et de gestion de base de données 13 et relié en réseau 25 au système informatique 14 du centre d'appels ;
- un dispositif téléphonique récepteur 12 aux normes de téléphonie mobile GSM capable de transmettre des données audit serveur 15.

Ce serveur d'informations fournisseurs 24 peut être hébergé :
- au même endroit que le centre d'appel 19, le système informatique 14 du centre d'appels 19 et le serveur informatique 15 étant alors relié par un réseau informatique 25 classique d'entreprise ;
- en un lieu quelconque distant du centre d'appels 19, le système informatique 14 du centre d'appels et le serveur informatique 15 étant alors relié par un réseau intranet ;

Le système de mise en relation se compose en dernier lieu d'un dispositif embarqué 26 à bord du véhicule 27 d'intervention de chaque personne fournisseur composant la flotte du prestataire de service, comprenant :
- un dispositif de repérage 10 de position géographique instantanée GPS ;
- un dispositif téléphonique émetteur 11 aux normes de téléphonie mobile GSM ;
- une carte électronique 28 à microprocesseur munie de différents programmes de gestion desdits dispositifs GPS 10 et GSM 11, lesdits dispositifs étant connectés à ladite carte 28.

Le dispositif GPS 10 est du type à transmission de données, il est capable d'assurer sa fonction principale à savoir la détermination sur demande de sa latitude et de sa longitude, mais il est en outre capable de transmettre, sous forme numérique, cette latitude et longitude à la carte électronique 28 à microprocesseur.

Le dispositif GSM 11 est également connecté à la carte électronique 28 et permet à celle-ci de transmettre la position géographique, reçue du dispositif GPS 10, au dispositif récepteur GSM 12 du serveur d'informations fournisseurs 24.

La carte électronique 28 est l'interface entre le dispositif de repérage GPS 10 déterminant sa position géographique et le dispositif émetteur GSM 11 transmettant cette position au dispositif récepteur GSM 12 du serveur d'informations fournisseurs 24 via un réseau de téléphonie mobile.

Plusieurs programmes permettent à la carte électronique 28 de gérer les transmissions de position, un commutateur 29 permettant de choisir l'un d'eux parmi les suivants :
- un programme commandant l'envoi d'une position géographique du véhicule à intervalles réguliers ;
- un programme commandant l'envoi d'une position géographique du véhicule suite à un déplacement d'une certaine distance ;
- un programme commandant l'envoi d'une position géographique du véhicule suite à l'arrêt ou au démarrage du véhicule ;
- un programme particulier d'antivol, la personne fournisseur sélectionnant ce programme lorsqu'elle quitte le véhicule, permettant de détecter un mouvement imprévu du véhicule et de le localiser à l'insu du conducteur mal intentionné.

L'ensemble du dispositif embarqué 26 peut d'autre part être décliné en une version pour fournisseurs piétons 30, les différents dispositifs étant conçus pour être peu encombrants et pour être intégrés à un vêtement spécial.

Le système de mise en relation directe que l'on vient de décrire fonctionne de la manière indiquée ci-après.

Chaque personne fournisseur, déclarée pour un ou plusieurs métiers donnés, choisi, au moyen du commutateur 29 de la carte électronique 28 du dispositif embarqué 26, un programme de transmission de sa position géographique au serveur d'informations fournisseurs 24.

Le serveur d'informations fournisseurs 24 connaît, par un déclaratif approprié, les caractéristiques précises de chacune des personnes fournisseurs lui transmettant sa position.

Pour chacune de ces personnes, et en fonction du programme de transmission qu'elle a choisi, le dispositif GPS 10 est sollicité régulièrement pour fournir la position géographique du lieu où il se trouve, cette position est alors émise par le dispositif émetteur GSM 11 vers le dispositif récepteur GSM 12 du serveur d'informations fournisseurs 24.

Au sein du serveur d'informations fournisseurs 24, le récepteur GSM 12 reçoit régulièrement les positions de toutes les personnes fournisseurs et les transmet au serveur informatique 15 auquel il est relié.

Le logiciel de gestion de base de données 13 du serveur constitue et met à jour, grâce aux informations reçues du récepteur GSM 12, une base de donnée 7 mettant en correspondance chaque personne fournisseur avec le ou les métiers qu'il est capable d'exercer ainsi que sa position géographique effective et le numéro d'appel de son téléphone mobile 5.

Lorsqu'un client 1 téléphone au centre d'appels 19 depuis un téléphone fixe 2, son appel 6 est pris en charge par le répondeur 20 diffusant un message de bienvenue et le service qu'il recherche ainsi que sa position géographique sont immédiatement déterminés.

Pour déterminer le service que la personne client 1 recherche, on peut associer un numéro d'appel par type de métier recherché ou utiliser les possibilités de sélection directe comme dans les entreprises, ou encore passer par un serveur vocal de sélection.

Dans tous les cas, le type de métier recherché est transmis, sous forme numérique, au système informatique 14 du centre d'appels 19.

Pour déterminer la position géographique du client 1 appelant, son numéro d'appel est lu par la centrale téléphonique 9 et transmis au système informatique 14 du centre d'appels 19 qui, par l'intermédiaire de sa base de données 21, obtient la position géographique du client 1.

Le logiciel de gestion de base de données 23 du système informatique 14 du centre d'appel lance alors une requête au serveur informatique 15 du serveur d'informations fournisseurs 24, en précisant la position du client 1 et le service recherché, pour savoir quelle personne fournisseur du métier recherché se trouve le plus proche du client 1.

Le serveur d'informations fournisseurs 24 répond à la requête du système informatique 14 du centre d'appels 19 en lui transmettant le numéro d'appel du téléphone mobile 5 du fournisseur sélectionné 3.

Le système informatique 14 du centre d'appels 19 transmet alors le numéro d'appel du fournisseur à la centrale téléphonique 9 configurée pour le composer et transférer l'appel du client 1 en attente vers le téléphone mobile 5 du fournisseur sélectionné 3, le coût du transfert d'appel et de la communication résultante étant attribué à la personne fournisseur ainsi sélectionnée ainsi qu'à la personne client.

L'invention permet en définitive à une personne client 1 d'être mise en relation 8 téléphonique directe avec la personne fournisseur 3 qui est proche d'elle et qui est susceptible de fournir le service désiré, à l'instant où cette personne client 1 appelle, le coût de la mise en relation directe étant réparti de façon symétrique entre la personne client et la personne fournisseur selon une clé de répartition choisie.

## Revendications

1. Système destiné à mettre en relation directe par voie électronique une personne client (1) potentiel susceptible d'exprimer un besoin ( service, lieu de fourniture, délai, quantité, prix) par un terminal de communication (2) et une personne fournisseur (3) potentiel apte à répondre à ce besoin et se trouvant dans une zone géographique au voisinage du lieu où le service doit être fourni (4) (dénommée zone de proximité), la personne fournisseur (3) faisant partie d'un ensemble pré-constitué de fournisseurs (3, 16, 17, 18, 30) pour le service considéré, un ou plusieurs services pouvant être fournis, la personne fournisseur (3) étant essentiellement mobile et équipée d'un terminal de communication (5), ce système comprenant :
- des premiers moyens aptes à déterminer en fonction de l'appel téléphonique (6) de la personne client (1) à un centre d'appels (19), d'une part le service recherché et d'autre part le lieu de fourniture de ce service ;
- des deuxièmes moyens aptes, à partir de l'ensemble des fournisseurs, à établir une base de données (7) mettant en correspondance chaque personne fournisseur avec sa localisation géographique et les services qu'il peut fournir, cette base de données (7) étant actualisée périodiquement ;
- des troisièmes moyens aptes à sélectionner dans ladite base de données (7) la ou les personne(s) fournisseur(s) apte(s) à fournir le service recherché et se trouvant dans la zone de proximité (4) ;
- et enfin des quatrièmes moyens aptes à établir une liaison téléphonique (8) directe entre la personne client (1) et la personne fournisseur (3) sélectionnée ou l'une ou chacune des personnes fournisseurs sélectionnées, la personne client (1) et la personne fournisseur (3) étant considérées appelantes lors de ladite liaison téléphonique directe ;
le système permettant ainsi à la personne client (1) d'obtenir la perspective de la satisfaction du besoin déterminé, à la localisation déterminée et ce par un fournisseur (3) apte à satisfaire ce besoin tant en ce qui concerne sa nature que sa localisation, la personne client (1) et la personne fournisseur (3) étant de surcroît en communication téléphonique directe (8) dont la tarification est affectée symétriquement à la personne client (1) et à la personne fournisseur (3).

2. Système selon la revendication 1, **caractérisé en ce que** lesdits premiers moyens comprennent :
- le terminal de communication (9) dudit centre d'appels (19) apte à répondre à l'appel (6) de la personne client (1) ;
- un dispositif de choix du service désiré relié audit terminal de communication (9) ;
- un dispositif de localisation du lieu de fourniture du service ou de localisation de la personne client relié audit terminal de communication (9).

3. Système selon la revendication 1 ou 2, **caractérisé en ce que** lesdits deuxièmes moyens comprennent :
- un dispositif (10) embarqué par chaque personne fournisseur déterminant, pour chacun d'eux, sa position géographique ;
- un dispositif (11) émetteur embarqué par chaque personne fournisseur transmettant ladite position géographique par ondes électromagnétiques ;
- un dispositif (12) fixe récepteur des positions géographiques des personnes fournisseurs émises par ledit dispositif émetteur (11) ;
- une base de données électronique (7) codant, sous forme numérique, la liste des personnes fournisseurs et associant à chacune d'elles un code précisant ses caractéristiques personnalisées, sa position géographique ainsi que les services qu'elle peut fournir ;
- un système de gestion de base de donnée (13) apte à recueillir les informations reçues par le dispositif fixe récepteur (12) des positions géographiques des personnes fournisseurs et à actualiser ladite base de données (7) en conséquence.

4. Système selon la revendication 2 et 3, **caractérisé en ce que** lesdits troisièmes moyens comprennent un dispositif de sélection apte à recueillir les informations fournies par le dispositif de choix de service et par le dispositif de localisation de la personne client et apte à obtenir de la base de données (7) des personnes fournisseurs le numéro d'appel du terminal de communication (5) de la personne fournisseur se trouvant dans la zone de proximité (4).

5. Système selon la revendication 4, **caractérisé en ce que** lesdits quatrièmes moyens comprennent un dispositif de mise en relation directe (8) apte à composer le numéro d'appel du terminal de communication (5) de la personne fournisseur obtenu par le dispositif de sélection et apte à transférer l'appel de la personne client (1) à ladite personne fournisseur (3), le coût de la communication établie entre la personne client (1) et la personne fournisseur (3) étant répartie symétriquement entre la personne client et la personne fournisseur selon une clé de répartition choisie.

6. Système selon la revendication 2, **caractérisé en ce que** ledit dispositif de choix du service désiré permet d'identifier le numéro d'appel composé par la personne client (1), celle-ci composant un numéro d'appel différent en fonction du service désiré.

7. Système selon la revendication 2, **caractérisé en ce que** ledit dispositif de choix du service désiré est un serveur vocal de sélection permettant à la personne client de sélectionner le service désiré avec les touches de son téléphone (2).

8. Système selon la revendication 2, **caractérisé en ce que** ledit dispositif de localisation de la personne client est, en cas d'appel depuis un téléphone fixe (2), composé d'un dispositif de lecture du numéro d'appel de cette personne client (1) et d'une base de données fournissant son adresse à partir de son numéro d'appel.

9. Système selon la revendication 2, **caractérisé en ce que** ledit dispositif de localisation de la personne client est apte à déterminer la position géographique de celle-ci, en cas d'appel depuis un téléphone mobile.

10. Système selon la revendication 3, **caractérisé en ce que** ledit dispositif (10) embarqué déterminant la position géographique de chaque personne fournisseur est un dispositif de positionnement GPS.

11. Système selon la revendication 3, **caractérisé en ce que** lesdits dispositifs émetteur (11) embarqué et récepteur (12) fixe sont respectivement un émetteur GSM et un récepteur GSM.

12. Système selon la revendication 3, **caractérisé en ce que** ladite base de données des personnes fournisseurs ainsi que ledit système de gestion de base de données comprennent un système informatique (15) formant support physique, sur lequel sont installés des logiciels de base de données (7) et de gestion de base de données (13).

13. Système selon la revendication 4, **caractérisé en ce que** ledit dispositif de sélection comprend un système informatique (14) intégré au centre d'appel (19) et muni d'un logiciel de gestion de base de données (23) apte à envoyer des requêtes à la base de données (7) des personnes fournisseurs.

14. Système selon la revendication 5, **caractérisé en ce que** ledit dispositif de mise en relation directe est une centrale téléphonique multilignes (9).

15. Procédé de mise en oeuvre d'un système selon l'une quelconque des revendications précédentes **caractérisé en ce que**
- les deuxièmes moyens établissent puis actualisent périodiquement une base de données (7) mettant en correspondance chaque personne fournisseur avec sa localisation géographique et les services qu'il peut fournir ;
- à partir d'un appel téléphonique (6) d'une personne client (1), les premiers moyens déterminent le service désiré par la personne client (1) ainsi que la localisation de fourniture du service désiré ;
- les troisièmes moyens déterminent le numéro d'appel du fournisseur (3) du service désiré se trouvant le plus proche de la localisation de fourniture de ce service ;
- les quatrièmes moyens établissent une liaison téléphonique directe (8) entre la personne client (1) et la personne fournisseur (3) dont le numéro d'appel a été déterminé par les troisièmes moyens.
